Europäisches Patentamt

European Patent Office

Office européen des brevets

(11) Publication number: **0 062 274**
A2

(19)

# (12) EUROPEAN PATENT APPLICATION

(21) Application number: **82102627.5**

(22) Date of filing: **29.03.82**

(51) Int. Cl.³: **F 16 D 33/00**

(30) Priority: **06.04.81 IT 339081**

(43) Date of publication of application: **13.10.82**
**Bulletin 82/41**

(84) Designated Contracting States: **DE FR GB NL**

(71) Applicant: **Fiorentini, Valeriano, Via Juraj Basnar, 3,
I-44011 Argenta (Ferrara) (IT)**

(72) Inventor: **Fiorentini, Valeriano, Via Juraj Basnar, 3,
I-44011 Argenta (Ferrara) (IT)**

(74) Representative: **Modiano, Guido et al, MODIANO &
ASSOCIATI S.A.S. Via Meravigli, 16, I-20123 Milan (IT)**

(54) **Fluid coupling equipped with control means.**

(57) The coupling comprises a hydraulic liquid containing
case (1) fixed to an internal combustion engine driveshaft
and rotatively carrying a driven shaft (15) whereto there is
keyed a first paddle wheel (18) housed in a chamber (22)
defined by the case interior and a second paddle wheel (25)
attached to the case (1) interior.

The second paddle wheel (25) is rigid with a tubular
portion (23) projecting inwardly in the case (1) and provided
with at least one peripheral opening (28) the area whereof
is controlled by a gate member set (32) movable on the
tubular portion, the second paddle wheel (25) further
defining with the case (1) a compartment (30) accommodat-
ing a disk member (75) effective to pick up and convey the
liquid into the chamber (22).

This invention relates to a fluid coupling equipped with control means, and, more specifically, to a fluid coupling for transmitting a torque moment from a driveshaft to a driven shaft, extending coaxially to each other, of the type comprising a case containing a preset amount of a liquid fluid and being rotatively attached to the driveshaft and rotatively carrying the driven or output shaft, a first paddle wheel keyed to the driven or output shaft, a second paddle wheel attached to the case inside and defining a chamber accommodating said first wheel, both said wheels being arranged to face each other such as to interact hydrodynamically.

The invention can be useful in transmitting motion from the engine unit to the drive wheels of transmission geared motorvehicles, such as passenger vehicles, trucks, earthmovers, lift trucks, tractors, and the like. However, its application may be extended to include all those instances wherein a connection is to be established between a powerplant and power user.

Known is that on such vehicles as specified above the transmission gear, and above all the friction clutch, are the parts which are mostly liable to wear. In spite of attempts to design it oversize, it has been so far impossible to produce a friction clutch unit which can endure prolonged operation under high loads, and in such cases periodic replacement at short intervals has been resorted to.

Also proposed have been hydraulic couplings as substitutes for friction clutches, wherein the transmitted torque is regulated by operating valving means which enable control of the amount of fluid being circulated. Examples of such couplings are described in U.S. Patents No.s 2,182,049 and 2,718,760, and French Patent No. 1,025,086. However, such couplings have excessively long response times, and do not permit a timely adjustment of the amount of fluid.

Accordingly the task of the invention is to provide a hydro-drive coupling which is substantially free of any of the drawbacks specified above.

According to one aspect of the invention this task is achieved by a fluid coupling for transmitting a torque moment from a driveshaft to a driven shaft arranged coaxially with each other, comprising a case containing a preset amount of a liquid fluid and being attached to the driveshaft and rotatably carrying the driven shaft, a first paddle wheel keyed to the driven shaft, a second paddle wheel attached to the case interior and defining a chamber wherein is accommodated said first wheel, said wheels facing each other such as to interact hydrodynamically together, characterized in that the second paddle wheel is rigid with a tubular portion projecting inwardly in said case and being provided with at least one peripheral opening the area whereof is controlled by a gate member set movable on said tubular portion through lever members actuatable from outside said case through control means, and that said second paddle wheel defines, together with said case, a compartment accommodating means for picking up and conveying the liquid fluid into said chamber.

Further features and advantages of the invention will be apparent from the following description of an embodiment thereof, with reference to the accompanying drawings, where:

Figure 1 is a sectional view taken through this fluid coupling; and

Figure 2 is a sectional view taken along the line II-II of Figure 1.

This fluid coupling comprises a substantially cylindrical case 1 which includes a disk 2, whereto a bell member 4 is attached peripherally with screw fasteners 3. The disk 2 has a series of holes 5 arranged along a circumferential line for engagement with screws for mounting it on the driveshaft of a motor, e.g. on the output shaft (not shown) of an internal combustion engine. The disk 2 constitutes in practice the flywheel of such an engine and is provided, around its periphery, with a ring gear 6 with which the pinion gear of the engine starter can mesh.

The bell 4 includes a cylindrical portion 7 and a plate 8. The plate 8 is provided externally with a plurality of radial ribs intended for stiffening purposes and heat dissipation. The portion 7 has an inner face 10 which is not truly cylindrical, but divergent toward the plate 8.

The case 1 contains a preset amount of a liquid fluid, usually oil, which can be admitted thereinto through a hole 11 closed by a cap 12 and provided at the periphery of the plate 8 such as to also serve as a drain hole.

On the flywheel 2, there is formed a central seat 13 intended to accommodate bearings 14 supporting the end of a coaxial shaft 15 to the case 1. The shaft 15 protrudes out of the opposite side for its connection to a transmission gear. On the shaft 15, near the bearings 14, a flange 16 is formed whereto a paddle wheel generally indicated at 18, and called hereinafter "turbine" in conformity with current terminology, is fastened by means of screws 17. That turbine comprises an annulus 19 having a cavity 20 wherefrom there extend, along radial planes, plural substantially semicircular paddles 21. Between the turbine 18 and flywheel 2, there is defined a chamber 22.

The turbine 18 is encircled externally by a tubular portion 23 which extends coaxially with the flywheel 2. Centered on and fastened to the edge of the portion 23, by means of screws 24, is a paddle wheel 25 which comprises an annulus 26 which is a mirror image of the annulus 19 and has radial blades 27. The wheel 25 will be called, again in conformity with current terminology, the "pump". The tubular portion 23 is provided with slots 28 which are angularly distributed and arranged in a perpendicular plane to the shaft 15. On the outer surface of the portion 23, which is truly cylindrical, and on either sides of the slots 28, there are formed two annular grooves accommodating O-rings 29. The slots 28 are adapted to communicate the chamber 22 and compartment 30, included between the turbine and pump, to the compartment 31 within the bell. On the tubular portion 23, there is slidably guided a ring 32 which has a thin edge formed with holes 33, and an area of increased thickness whereinto stems 34, parallel to the shaft 15 and angularly distributed, are threaded. The ring 32, as will be explained hereinafter, forms a gate valving member which allows, when displaced on the tubular portion 23, the opening of the slots 28 to be adjusted.

The stems 34 are passed through holes formed in a collar 35 of the pump which projects externally to the tubular portion 23. On either sides of each stem 34, there are arranged pairs of cylindrical springs 36 which have their opposite ends inserted into recesses of the ring 32 and collar 35.

The opposite ends of the stems to those threaded into the ring 32 are associated with rocker arm levers 37 pivoted to the annulus 26 and having two arms, 38,39. The levers 37 are journalled on pivot pins 40 which are carried on projections 41 located rearwardly to the annulus 26 and the plane of oscillation of the levers 37 extends radially to the shaft 15. The levers 37 are connected to the stems 34 by means of nuts 42 which are threaded onto the ends of the stems penetrating openings 43 through the ends of the arms 39 of the levers. Owing to the action of the springs 36, the ends of the outer arms 39 are held in abutment relationship with the collar 34. The ends of the inner arms 38 of the levers 37 cooperate with a lip or flange 44 of a bushing 45 which is carried rotatably in a thrust bearing 46 on a tube 47. The bearing 46 abuts axially against a collar 48 on the tube 47, whereinto are axially installed stems 49 which extend parallel to the shaft 15 and are angularly distributed around the latter. The stems 49 are secured in the collar 48 by means of pins 50 extending diametrically therethrough and are led into an annular chamber 51 of a cylindrical body, generally indicated at 52, which is assumed to be stationary because fastened, in a manner not shown, to fixed parts of a vehicle or the like.

The annular chamber 51, on the side of the collar 48, is closed by a ring 53 rigid with the body 52.

The body 52 comprises a sleeve 54 on which the tube 47 is slidable and which rotatably carries, through a pair of bearings 55, the shaft 15. On the hsaft 15, adjacently the flange 16, there is formed a cylindrical embossment 56 having the same diameter dimension as the inside diameter of the tube 47 which extends as far as the separating plane between the turbine 18 and pump 25. Thus, between the ends of the sleeve 54 and the embossment 56, there is defined a circular opening 57 which communicates the interior of the sleeve 54 with the compartment 30 and the span whereof can be adjusted by sliding the sleeve 47 by means of the stems 49.

The stems 49 are led out of the cylindrical body 52 through the bottom of the annular chamber 51 and terminated into a cavity 58 where they are interconnected by a flange 59 secured by means of nuts 60

- 9 -

0062274

being threaded onto the threaded ends of the stems.

The flange 59 is an integral part of a bushing 61 guided on the shaft 15 and formed with an annular groove 62 which is engaged by a fork, not shown, under control by the vehicle operator through a specific pedal control.

The flange 59 closes the front of the cavity 58 and slidably guided therein are pins 63 the ends whereof, located inside the cavity 58, are thread engaged in a ring 64 provided with a friction lining 65. Since the body 52 is stationary, the flange 59 and ring 64 are rotation-wise stationary but slidable axially. Between the ring 64 and flange 59, there intervene springs 66 accommodated in specific recesses, which springs urge the ring 64 away from the flange 59 until the pins 67, which are inserted diametrically through the ends of the pins 63 protruding out of the flange 59, abut against the latter.

On the shaft 15, between the ring 64 and bearings 55, there is arranged a bushing 68 keyed to the shaft 15 by means of a key 69, and blocked axially between a shoulder 70 on the shaft 15 and snap ring 71. The bushing 68 has a flange 72 juxtaposed to the ring 64 and acting as a backing surface for the friction lining 65. Thus, a brake for the shaft 15 is formed as the friction lining is brought to contact the flange 72.

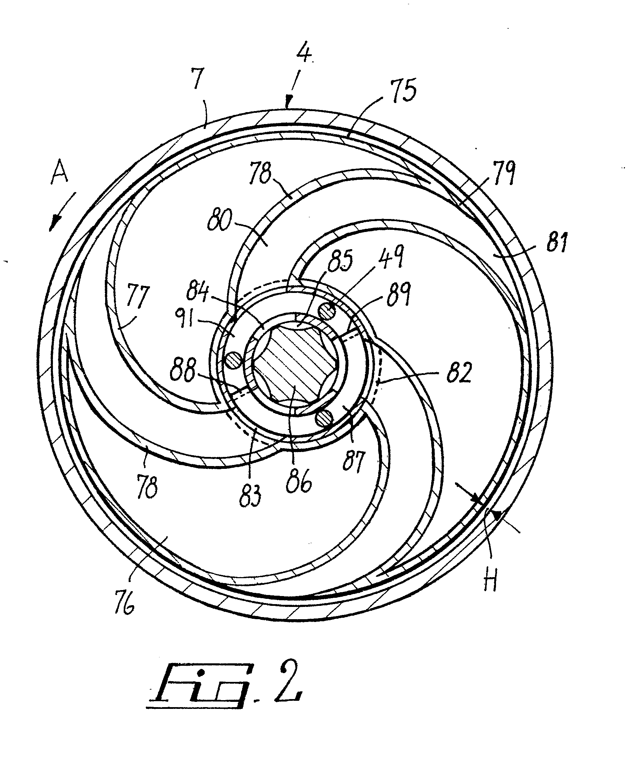

On the cylindrical body 52, there is rotatably supported through a bearing 73, the bell 4, a ring 74 ensuring a tight seal between the bell and

0062274

cylindrical body 52. On one side of the bearing 73, a stationary disk 75 is rotatively rigid with the body 52 which has the shape of a flattened drum and operates as a stationary pump for picking up and circulating the oil. The drum 75, as shown also in Figure 2, comprises a pair of circular and flat-parallel plates 76 which are joined together by three pairs of paddles 77,78, which extend from the center spirally toward the periphery. The paddles or blades 77 are continued along the contour of the plates 76 to merge with the outer edge of the blades or paddles 78 and define baffles 79 oriented opposite the direction of rotation A of the case. The paddles or blades 77,78 define channels 80 therebetween which have a width that grows inwardly, and outer inlet ports or openings 81 and inner outlet ports or openings 82. The outlet openings 82 of the channels 80 are communicated, through slots 83 in the body 52, to the annular chamber 51, and through slots 84, to the cavity 85 enclosed in the sleeve 54.

On that portion of the shaft 15 which rotates within the cavity 85, there is formed an auger 86 constituting the rotor of a pump which draws oil through the slots 84 and delivers it into the compartment 30 through the opening 57. The annular chamber 51 is divided in two parts by a shaped element which comprises an arcuate portion 87 of substantially semicircular configuration, from the ends whereof there extend two straight sections 88, 89, perpendicularly to the portion 87. The portion 87 closes the front of the port of the chamber 51 over a preset angular extent, while the two straight sections 88,89 extend axially inside the chamber 51 as far as the bottom of the latter. Thus, there are formed two compartments 90,91 which are independent of each other. The compartment 90 is connected, on one side and through a conduit 92, to the delivery side of the oil, and, on the other side, through openings 93, to the compartment 31 of the case. The other compartment 91 is in constant communication with the cavity 85 through the slots 84 and with the channels 80 through the slots 83, as well as with an oil discharge conduit 94.

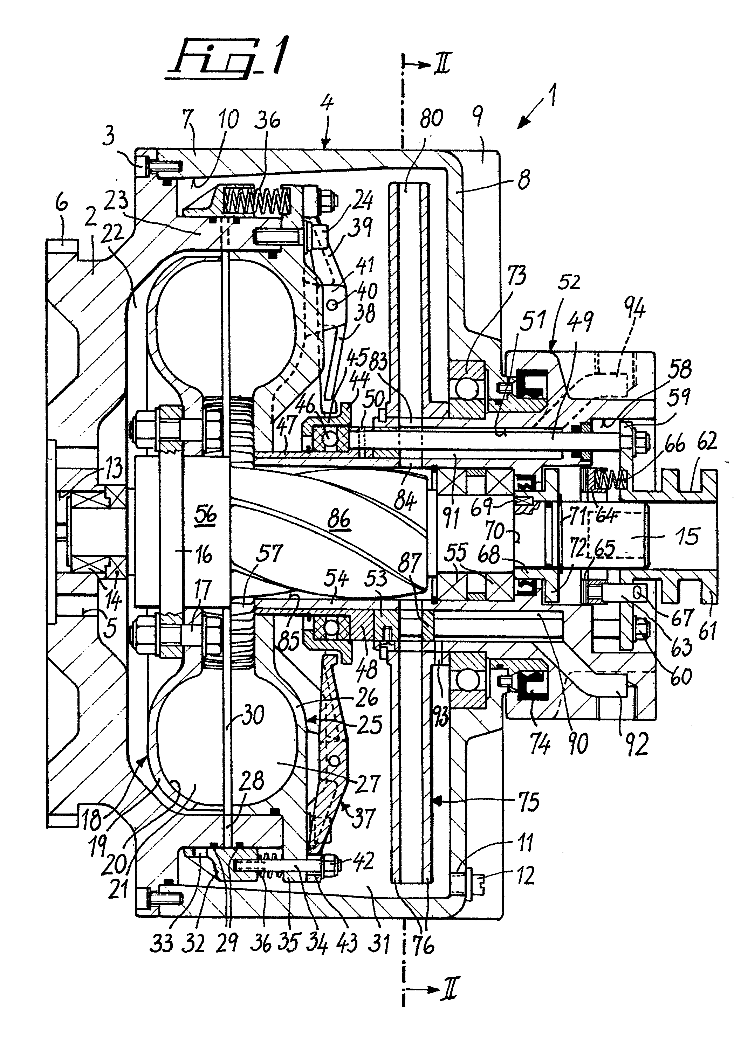

The device just described operates as follows. As mentioned, the flywheel 2 is connected to the output shaft of an engine, while the body 52 is secured in a stationary manner, e.g. to the case of a transmission gear or other stationary part. In the position shown in Figure 1, the rotation of the driveshaft rotatively entrains the case 1 relatively to the stationary pump 75. The oil introduced into the case through the conduit 92, compartment 90 and slots 93, owing to the centrifugal force, remains attached to the inner wall of the cylindrical portion 7 which , by diverging toward the plate 8, conveys it around the periphery of the pump 75. After introducing into the case 1 a preset amount of oil, for clarity of illustration it will be assumed that the conduits 92 and 94 are closed so that the oil can neither enter nor exit. In that condition the pump, through the openings 81 and by means of the baffles 79, picks up the oil and pumps it, through the openings 83,84 into the cavity 85. Hence, the oil, through the opening 57, is transferred into the compartment 30 and deflected, by the blades 27 of the pump 25, to between the blades 21 of the turbine 18, which is accordingly entrained to rotate and drive therealong the shaft 15 whereto it is keyed. Once the oil has filled the compartment 30 and, by centrifugal force, the chamber 22, a rotary coupling of the engine shaft and shaft 15 takes place, which coupling may be regarded as rigid excepting for a slight slip due to unavoidable leakage.

The coupling, similarly to what occurs on conventional motorvehicles, allows gear shifting on the vehicle by temporarily disengaging the engine shaft from the transmission gear. For this purpose, by operating a suitable pedal control (corresponding to the clutch pedal of traditional motorvehicles), the fork or yoke is moved into engagement on the bushing 61, thus causing through the stems 49 a sliding movement of the tube 47 and bushing 45, and the engagement of the flange 44 with the inner ends of the levers 37. The levers 37 are thus forced to swing and produce a displacement of the stems 34 and accordingly of the ring toward the collar 35. The sliding movement of the tube 47 results in the closing of the opening 57 at the moment when the holes 33 in the ring 32 are moving into alignment with the slots 28 in the portion 23. The oil contained in the chamber 22 and compartment 30 is allowed to flow out by centrifugal force and into the case 1, thereby, any further admission of oil being prevented into the compartment 30 by the closing of the opening 57, the engine shaft or driveshaft is disengaged from the shaft 15. As the movement of the stems 49 is continued, the friction lining 65 is brought to contact the flange 72, thus stopping the shaft 15 from rotating.

It should be noted that the mutual position of the ring 32 and tube 47 is such that, prior to the opening 57 being fully closed, the slots 28 are uncovered. Thus, by suitably adjusting the pressure on the pedal control, and consequently adjusting the stroke length of the stems 49, it becomes possible to vary the span of the opening 57 and slots 28, and consequently also the amount of oil passed into the case 1. In that way, adjustment of the slip between the turbine 18 and pump 25 is achieved to proportion the driving couple to the resisting couple. During the time when oil flows down through the slots 28, a corresponding amount of oil is picked up by the stationary pump 75 and pumped through the cavity 85 and opening 57 into the compartment 30 between the turbine 18 and pump 25.

Thus an oil circulation is established, the oil, in contacting the bell 1, being cooled and contributing to maintaining non-critical temperature levels in the moving parts.

The amount of oil being circulated is in practice determined by the height "H" of the gap between the periphery of the disk 75 and inner surface of the portion 7.

As the bushing 61 is again moved into the coupling activation position, the tube 47 will move back into its abutment position against the collar 53 and the levers 37, owing to the bias effect of the springs 36, will be brought to bear once again on the collar 35, in which position the ring 32 covers the slots 28. Thus, the oil is allowed to again fill the compartment 30 and chamber 22 to hydrodynamically couple the turbine 18 and pump 25 together.

One of the basic advantages of the coupling described hereinabove is that the auger 86 makes the turbine 18 to pump 25 connection more instantaneous in that it contributes to the action of the stationary pump 75, pumping the oil into the compartment 30. In the event that the coupling described above is to be subjected to abnormal and prolonged stresses, such as are encountered in particular with earthmovers, circulation of the oil through an external heat exchanger interconnected between the conduits 92 and 94 would have to be provided.

For this purpose, the oil picked up by the stationary pump 75 would be partly directed into the compartment 91 for circulation through the heat exchanger. The oil from the exchanger would be readmitted into the case 1 through the conduit 92 and compartment 90 from which it would flow into the compartment 31 through the slots 93.

0062274

The invention may be variously changed and modified. For example, to achieve a greater potentiality for the coupling, the turbine 18 may be of the dual type, that is formed with blades arranged on the opposite faces and cooperating with two respective pumps located opposite them. For circulating the oil through the heat exchanger, an external pump may be provided. This coupling allows gear shifting even while the vehicle is travelling. The displacement of the tube 47, instead of mechanically, may be obtained pneumatically or hydraulically.

0062274

CLAIMS

1. A fluid coupling for transmitting a torque moment from a driveshaft to a driven shaft (15) arranged coaxially with each other, comprising a case (1) containing a preset amount of a liquid fluid and being attached to the driveshaft and rotatably carrying the driven shaft (15), a first paddle wheel (18) keyed to the driven shaft (15), a second paddle wheel (25) attached to the case (1) interior and defining a chamber (22) wherein is accommodated said first wheel, said wheels (18, 25) facing each other such as to interact hydrodynamically together, characterized in that the second paddle wheel (25) is rigid with a tubular portion (23) projecting inwardly in said case (1) and being provided with at least one peripheral opening (28) the area whereof is controlled by a gate member (32) set movable on said tubular portion (23) through lever members (37) actuatable from outside said case (1) through control means, and that said second paddle wheel (25) defines, together with said case (1), a compartment (30) accommodating means (75) for picking up and conveying the liquid fluid into said chamber (22).

2. A coupling according to Claim 1, characterized in that said gate member (32) comprises a ring guided for sliding movement on the tubular portion (23) and caused to move, against the bias of spring means (36), through levers (37) pivoted as rocker arms on said second paddle wheel for oscillation in radial planes, said levers (37) being engaged with a bushing element (45) arranged coaxially on said driven shaft (15) and movable axially by means of stems (49) guided through a stationary pivotal support body (52) for said case (1) and operable from the outside.

3. A coupling according to Claim 2, characterized in that said means for picking up and conveying the liquid fluid into said chamber (22) comprises a disk member (75) including a pair of circular plates (76) extending flat-parallel and being rigid with said stationary pivotal support body (52) for said case (1), between said plates (76) there being arranged paddles or blades (77, 78) extending spirally toward the periphery and defining channels (80), said channels having outer mouths (82) substantially tangentially to said case wall and opening into a cavity (85) connected to said compartment (30) and enclosed between said paddle wheels (18, 25).

4. A coupling according to Claim 2, characterized in that said bushing element (45) is carried rotatably on a tube (47) arranged to slide axially along a sleeve (54) formed in said stationary body (52) and movable by means of stems (49) guided through said stationary

- 18 -

0062274

body (52), said tube (47) having one end which projects inside the chamber enclosed between said paddle wheels (18, 25) and controls the inlet opening thereof.

5. A coupling according to Claim 4, characterized in that  the portion of said driven shaft (15) located inside said sleeve (54) has an auger formation (86) thereon.

6. A coupling according to Claim 5, characterized in that said stems (49) are guided through said stationary body (52) and are interconnected externally by a plate (59) wherewith is rotatively rigid a friction ring (64) supported axially in an elastic manner and arranged to cooperate with a flange (72) keyed to said driven shaft (15) to form a braking member.

7. A coupling according to any of Claims 3 to 6, characterized in that, in said stationary body (52), there is formed an annular chamber (51) divided into two compartments (90, 91) connected, through conduits (92, 94) in said stationary body (52), to the inlet end, and respectively outlet end, of an external heat exchanger, one (91) of said compartments being connected to said stationary pump and said cavity (85), and the other (90) of said compartments to the interior (31) of said case (1).

8. A fluid coupling equipped with control means, and substantially as herein described and illustrated.

FIG.1

0062274

1/2

Fig. 2